# EUROPEAN PATENT APPLICATION

(11) **EP 1 120 770 A1**
(43) Date of publication of application: **01.08.2001**
(21) Application number: 00944310.2
(22) Date of filing: 06.07.2000
(51) Int. Cl.: G09F 13/04, G09F 13/12

(54) **LIGHT TRANSMITTING COLORED DISPLAY PART**

(30) Priority: 07.07.1999 JP 19377099
(71) Applicant: Nippon Petrochemicals Company, Limited, Tokyo 100-8530 (JP)
(72) Inventor: NUMAO, Yosuke, Yokohama-shi, Kanagawa 233-0007 (JP); KUMEHARA, Hideo, Ota-ku, Tokyo 146-0085 (JP); NISHIMURA, Suzushi, State College, PA 16801 (US)
(74) Representative: Strehl Schübel-Hopf & Partner
(86) International application number: JP0004518
(87) International publication number: WO0104866

(57) **Abstract**

A light-transmitting colored display part characterized by comprising a filter layer which provides a transmitting light and a reflection light different from each other in color tone and texture (material feeling), and provided on a light transmitting portion of a light transmitting display part used in an electronic appliance and the like provided with a light source, the light-transmitting colored display delivering a glossy feel or a transparency as the light source is turned on or off, with its tone varying with an observation angle. The filter layer preferably uses a cholesteric liquid crystal film. Accordingly, a light-transmitting colored display part having a high texture and deep tone and being excellent in appearance is provided.

## Description

### TECHNICAL FIELD

This invention relates to a light-transmitting display part that is characterized in material feeling and color tone, and used as keys, buttons, switches, indicators and the like. These parts are used for electric household appliances, office automation machinery, audiovisual devices, portable electronic machinery and so forth.

### BACKGROUND ART

In order to enhance desirable feeling of material such as gloss in the above-mentioned light-transmitting display parts, several methods are known. That is, a method of mixing pigment or metal powder into a resin material, a method of applying a coating material containing pigment or metal powder, a method of plating, and a method of applying an inorganic thin film by vapor deposition or sputtering.

In recent years, concerning light-transmitting display parts such as keys, buttons, switches and indicators used for electronic machinery and other appliances, it is strongly required that they have good appearance such as material feeling (texture) and deep color tone. However, according to the conventional methods, those simultaneously having light-transmitting property, good material feeling and deep color tone have not been obtained.

The object of the present invention is, therefore, to solve the above-mentioned problems and to provide a light-transmitting display part having good appearance such as high material feeling and deep color tone. This can be attained by setting filter layers in light-transmitting portions, through which filter layers the transmitted light and the reflected light are different in color tone

### DISCLOSURE OF INVENTION

In the following, the present invention will be described in more detail.

The display parts of the present invention can be mounted on, for example, electronic machinery having light sources. They may be operating parts, such as keys, buttons and switches, or indicators to provide signs. Moreover, either portions of parts or whole bodies of parts are of light-transmitting.

The filter layer used in the present invention has the property of both light transmitting and light reflecting. The transmitted light and reflected light are different color tones because of the difference between spectrum of transmitted light and that of reflected light. Moreover, the reflected light presents glossy feeling owing to its specular reflection, and on the contrary, the transmitted light presents a feeling of transparency. Thus, both are different in feeling quality.

Furthermore, the filter layer can be laminated on the surface of a display part and can also be set in any place between the display part and the light source. When the display part is composed of a plurality of members and the plural layers are laminated in layers, the filter layer can be set in any position between the layers of members.

In the case that a light-transmitting colored display part of the present invention is set in an electronic appliance having a light source, when the light source is turned off, users or observers can recognize the internal reflection of the light of surroundings from the filter. When the light source is turned on, the observers recognize both the light from the light source that is transmitted through the filter layer and the foregoing internal reflection simultaneously. Then, a color tone and material feeling depend on the balance between the light from the light source and that of surroundings. Therefore, it is possible to change further the color tone by using light sources in various colors.

Described in the following is the case in which the transmitted light and the reflected light from the same light source of a filter layer are almost in the relation of complementary colors. Although the light rays from a light source and that of surroundings are not just the same, when both the light rays can be regarded as almost the same white light rays, the transmitted light rays coming from the light source and the reflected light rays coming from surroundings can be recognized as almost white light rays when they are observed together. If the transmitted light and the reflected light are not almost complementary, the color tone varies depending on the spectra of the respective light rays.

Exemplified as the above filter layers are multilayer thin film of dielectric material, which is prepared by laminating in layers dielectric thin films having different refractive indices by means of vacuum deposition or spattering, and a cholesteric liquid crystal film which is prepared by processing cholesteric liquid crystal into a thin film. The cholesteric liquid crystal film is particularly preferable because it can easily be prepared at low cost.

Within the cholesteric liquid crystal film, liquid crystal molecules are oriented regularly and spirally twisted in the direction of film thickness. The axes of spirals are roughly parallel to the direction of film thickness, and the layer structures at intervals of the respective pitch of spirals form planar structures on a substrate. Owing to such structures, a specific optical property of selective reflection that alternative circular polarization is reflected in a region of specific wavelength, is presented.

Because the above-mentioned property is limited to a specific wavelength band, the reflected light and the transmitted light are complementary, and both the lights present different color tones. Furthermore, the wavelength band of selective reflection depends on observation angle due to blue-shift phenomenon, so that the color tones of reflected light and transmitted light change also depending on observation angle. Moreover, the film has a specular surface, which has a feeling of unique material owing to its metallic luster. The degree of glossiness caused by specular reflection can be adjusted by making the surface of film diffusive.

Cholesteric liquid crystals used in the present invention are not limited, as long as they form cholesteric orientation in the state of liquid crystal. Among them, cholesteric liquid crystalline polymers are preferable because of the easiness in handling and film formation. As the cholesteric liquid crystalline polymer, it is preferable that the polymer presents cholesteric orientation that can be fixed without difficulty.

In order to fix the cholesteric orientation in a stable state, it is particularly preferable that the liquid crystal does not have any crystalline phase in the temperature range of lower than the cholesteric phase in a phase transformation of liquid crystal. If it has a crystalline phase in the above low temperature region, the crystalline phase appears inevitably when cooled for fixing, and as a result, a cholesteric orientation once formed is destroyed. Accordingly, the cholesteric liquid crystalline polymers used in the present invention is particularly preferable in that it presents a good cholesteric orientation due to the interfacial effect as well as it is vitrified in the temperature lower than the cholesteric phase, that is, lower than the transition point of liquid crystal.

Exemplified as the above cholesteric liquid crystalline polymers are the composition of cholesteric liquid crystalline polymer prepared by incorporating optically active components into a nematic liquid crystalline polymer and a cholesteric liquid crystalline polymer having optically active groups in molecules.

Exemplified as the nematic liquid crystalline polymers are main chain-type liquid crystalline polymers such as polyester, polyimide, polyamide, polycarbonate and polyester imide, and side chain-type liquid crystalline polymers such as polyacrylate, polymethacrylate, polymalonate and polysiloxane. Among them, liquid crystalline polyester is preferable in view of its feasibility in synthesis, good transparency, easiness in orientation and its fixing, and the value of glass transition point.

Further, as typical examples of optically active components compounded into the above-mentioned nematic liquid crystalline polyester in order to twist the polyester and to form cholesteric orientation, there are optically active low molecular weight compounds and low molecular weight compositions. Any of them can be used in the present invention as long as it has optically active group. In view of the compatibility with the above liquid crystalline polyester, it is preferable to use optically active liquid crystalline low molecular weight compounds or liquid crystalline low molecular weight compositions.

It is possible to exemplify optically active high molecular weight compounds or high molecular weight compositions, as the optically active components. Any of them can be used as long as it has optically active groups in its molecule. However, from the viewpoint of the compatibility with the above nematic liquid crystalline polyester, it is preferable to use optically active liquid crystalline polymers or polymer compositions. Exemplified as the above liquid crystalline polymers are polyacrylate, polymethacrylate, polymalonate, polysiloxane, polyester, polyamide, polyester amide, polycarbonate, polypeptide, and cellulose. Furthermore, the composition containing the above liquid crystalline polymers as a main component can also be used. Among them, the optically active polyesters having aromatic structure as a main component is preferable in view of the compatibility with the above nematic liquid crystalline polyester.

Exemplified as the cholesteric liquid crystalline polymers having optically active groups in molecules are polyester, polyimide, polyamide, polycarbonate, and polyester imide that have optically active groups in the main chain of polymers. In addition, there are polyacrylate, polymethacrylate, polymalonate and polysiloxane that have optically active groups in the side chain of polymers. Among them, optically active liquid crystalline polyester is preferable from the viewpoint of the easiness in synthesis, good transparency, the easiness of orientation and its fixing, and glass transition point.

Moreover, cholesteric liquid crystal having crosslinking structure in its molecules, which can be subjected to cholesteric orientation and then to crosslinking so as to fix the orientation, can also be used in the present invention.

The foregoing cholesteric liquid crystal layer can be obtained by applying the above liquid crystalline polymer to the surface of, for example, an alignment layer formed on a light-transmitting substrate, then treating it under heating.

The above light-transmitting substrate are exemplified by glass, light-transmitting plastic film and sheet and polarizing film. As the kinds of glass, soda glass, silica-coated soda glass, and borosilicate glass can be used. As plastic substrates, there are exemplified by polymethyl methacrylate, polystyrene, polycarbonate, polyether sulfone, polyphenylene sulfide, amorphous polyolefin, triacetyl cellulose, polyethylene terephthalate, and polyethylene naphthalate.

As the alignment layers, polyimide films treated with rubbing are favorably used, and other alignment layers well known in this technical field can also be used. Furthermore, the plastic films and sheets that function as orienting substrate by direct rubbing treatment without applying any coating of polyimide or the like can also be used as a light-transmitting substrate according to the present invention. The method of orientation is not limited particularly, as long as it can orient cholesteric liquid crystal molecules uniformly in parallel to the interface of orienting treatment.

In the next step, a layer of cholesteric liquid crystal having an appropriate pitch length is formed on the alignment layer that is formed on a light-transmitting substrate.

As a means of coating a cholesteric liquid crystalline polymer on the alignment layer, melt coating process or solution coating process is employed. In view of the whole process, solution coating is desirable.

In order to carry out the solution coating, the cholesteric liquid crystalline polymer is dissolved into a solvent with a prescribed ratio to prepare a solution of a certain concentration. The solvent varies depending on the kind of liquid crystalline polymer. They may be generally halogenated hydrocarbons such as chloroform, dichloroethane, tetrachloroethane, trichloroethylene, tetrachloroethylene and o-dichlorobenzene, and mixed solvents of the above compounds and phenols, and polar solvents such as ketones, ethers, dimethylformamide, dimethylacetamide, dimethyl sulfoxide, N-methylpyrrolidone, sulfolane and cyclohexane. The concentration of solution cannot be generalized because it varies depending on the kind of the liquid crystalline polymer. However, it is usually in the range of 5 to 50% by weight, preferably 7 to 30% by weight. This solution is applied to an alignment layer or a light-transmitting substrate that have been subjected to orienting treatment such as rubbing.

As the coating methods, spin coating, roll coating, die coating, curtain coating and the like are employed.

After coating is over, the solvent is removed by drying, and the process of cholesteric orientation is completed by treating the coated material with heat at a predetermined temperature for a fixed period of time. The thus obtained oriented material is then cooled to a temperature below the glass transition point of cholesteric liquid crystalline polymer to form a cholesteric liquid crystal layer. In the cholesteric liquid crystal layer, the axes of spirals are uniformly in parallel in the direction of film thickness and pitches of spirals are equal also in the direction of film thickness.

The thickness of cholesteric liquid crystal layer is generally in the range of 0.1 to 30 µm, preferably 0.2 to 10 µm, more preferably 0.5 to 5 µm.

The wavelength band of selective reflection is generally in the range of 30 to 200 nm, preferably 50 to 150 nm, more preferably 70 to 120 nm.

An over coating layer can be formed on the surface of the thus obtained liquid crystalline polymer of liquid crystal film in order to protect the surface of liquid crystal. The material for the over coating layer is not particularly limited, and for example, an adhesive material that presents optical isotropy after curing can be used. When an adhesive material is used, it is possible to form an over coating layer through a method as follows. The liquid crystal surface of a liquid crystal film and a peelable substrate are stuck together using an adhesive material, the adhesive is then cured and the peelable substrate is peeled off.

The above-mentioned peelable substrate is not especially limited as long as it can be subsequently peeled off and it is self-supporting. As those substrates, plastic films having peelability are generally desirable. The above peelability means that when the combined material is prepared by sticking a liquid crystal film with a peelable substrate using an adhesive material, the boundary surfaces between the adhesive material and the peelable substrate are peeled off from each other..

The above-mentioned adhesive material is not particularly limited as long as it can stick the surface of cholesteric liquid crystalline polymer to the peelable substrate and the peelable substrate can be peeled off subsequently. The adhesive materials are classified into photo-curing type, electron beam-curing type and thermosetting type according to the types of hardening. Among them, the photo-curing or electron beam-curing adhesive materials containing a main component of acrylic oligomer, and other photo-curing or electron beam-curing adhesive materials containing epoxy resin are favorably used. The mode of adhesion between a liquid crystal film and a peelable substrate is not particularly limited. In general practice, a layer of adhesive material is placed between a liquid crystal film and a peelable substrate. The thickness of the layer of adhesive material is not particularly limited. It is generally in the range of about 1 µm to 30 µm. To the adhesive material can be added various additives such as antioxidant and UV absorber as long as they do not spoil the effect of the present invention.

As described above, it is possible to produce the cholesteric liquid crystal film that presents selective reflection phenomenon according to the pitch of spirals relative to regions of infrared ray, visible ray and ultraviolet ray.

### BEST METHOD FOR CARRYING OUT THE INVENTION

### <Example 1>

A layer of liquid crystalline polyester composition containing an R-isomer of optically active compound having a glass transition temperature of 77°C was applied onto a triacetate film having a rubbed polyimide layer, by spin coating method. It was then treated by heating at 135°C for 10 minutes to prepare a cholesteric liquid crystal film. The cholesteric liquid crystal layer was about 2.0 µm in thickness and presented a selective reflection zone of about 110 nm in wavelength with a center wavelength of about 670 nm. The reflected light of the obtained film was glossy and the transmitted light presented transparent feeling. The color of reflected light and that of transmitted light in the front face were red and light green, respectively. The color of reflected light and that of transmitted light in an oblique angle were gold and blue, respectively. The obtained film was laminated onto the surface of a push button made of transparent resin, which button was pushed to turn on a light. Because of the characteristics of the reflected light and the transmitted light, different color tones and different material feeling were presented depending on the state of switch on or off. It was possible to attain fine appearance never experienced before.

### <Example 2>

A film of liquid crystalline polyester composition containing an S-isomer of optically active compound having a glass transition temperature of 77°C was applied onto a triacetate film having a rubbed polyimide layer, by spin coating method. It was then treated with heat at 140°C for 10 minutes to prepare a cholesteric liquid crystal film. The cholesteric liquid crystal layer was about 2.3 µm in thickness and presented a selective reflection zone of about 105 nm in wavelength with a center wavelength of about 580 nm. The reflected light of the obtained film glossy and the transmitted light presented transparent feeling. The color of reflected light and that of transmitted light in the front face were yellow and blue, respectively. The color of reflected light and that of transmitted light in an oblique angle were yellowish green and light pink, respectively. The obtained film was laminated onto the surface of a push button made of transparent resin, which button was pushed to turn on a light. Because of the characteristics of the reflected light and the transmitted light, different color tones and different material feeling were presented depending on the state of switch on or off. It was possible to attain fine appearance never experienced before.

### <Example 3>

A layer of liquid crystalline polyester composition containing an R-isomer of optically active compound having a glass transition temperature of 80°C was applied onto a triacetate film having a rubbed polyimide layer, by spin coating method. It was then treated by heating at 145°C for 10 minutes to produce a cholesteric liquid crystal film. The cholesteric liquid crystal layer was about 2.7 µm in thickness and presented a selective reflection zone of about 100 nm in wavelength with a center wavelength of about 530 nm. The reflected light of the obtained film was glossy and the transmitted light presented transparent feeling. The color of reflected light and that of transmitted light in the front face were green and pink, respectively. The color of reflected light and that of transmitted light in an oblique angle were bluish green and light yellow, respectively. The obtained film was laminated onto the surface of a push button made of transparent resin, which button was pushed to turn on a light. Because of the characteristics of the reflected light and the transmitted light, different color tones and different material feeling were presented depending on the state of switch on or off. It was possible to attain fine appearance never experienced before.

### <Example 4>

A layer of liquid crystalline polyester composition containing an S-isomer of optically active compound having a glass transition temperature of 80°C was applied onto a triacetate film having a rubbed polyimide layer by spin coating method. It was then treated by heating at 150°C for 10 minutes to prepare a cholesteric liquid crystal film. The cholesteric liquid crystal layer was about 3.0 µm in thickness and presented a selective reflection zone of about 95 nm of wavelength with a center wavelength of about 470 nm. The reflected light of the obtained film was glossy and the transmitted light presented transparent feeling. The color of reflected light and that of transmitted light in the front face were blue and light yellow, respectively. The color of reflected light and that of transmitted light in an oblique angle were bluish purple and yellow, respectively. The obtained film was laminated onto the surface of a push button made of a transparent resin, which button was pushed to turn on a light. Because of the characteristics of the reflected light and the transmitted light, different color tones and different material feeling were presented depending on the state of switch on or off. It was possible to attain fine appearance never experienced before.

### INDUSTRIAL APPLICABILITY

The light-transmitting display part of the present invention can be used for electronic machinery such as keys, buttons, switches and indicators, which presents fine appearance never experienced before, owing to its excellent color tones and material feeling.

## Claims

1. A light-transmitting colored display part, wherein a light-transmitting portion is provided with a filter layer which presents different color tones and different material feeling in the respective transmitted light and reflected light.

2. A light-transmitting colored display part in Claim 1, wherein the transmitted light and the reflected light from said filter layer are roughly in the relation of complementary colors to each other.

3. A light-transmitting colored display part in Claim 1, wherein the color tones of the transmitted light and the reflected light from said filter layer vary depending on the angle of observation.

4. A light-transmitting colored display part in Claim 1, wherein said filter layer contains a cholesteric liquid crystal layer.
